# FASCICULE DE BREVET EUROPEEN

(11) **EP 2 768 686 B1**
(45) Date de publication et mention de la délivrance du brevet: **10.02.2016**
(21) Numéro de dépôt: 12775251.7
(22) Date de dépôt: 19.10.2012
(51) Int. Cl.: B60K 7/00, B60K 17/04, B60K 17/356, B60K 23/08, B60K 1/00, B60K 17/02

(54) **VEHICULE A TRACTION ELECTRIQUE**
FAHRZEUG MIT ELEKTRISCHEM ANTRIEB
ELECTRIC TRACTION VEHICLE

(30) Priorité: 20.10.2011 FR 1159521
(43) Date de publication de la demande: 27.08.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: WALSER, Daniel, 63040 Clermont-Ferrand Cedex 9 (FR)
(74) Mandataire: Lasson, Cédric Y. M.
(86) Numéro de dépôt international: PCT/EP2012/070768
(87) Numéro de publication internationale: WO 2013/057257

(56) Documents cités:
- DE-U1-202009 014 490
- FR-A1- 2 954 441
- US-A1- 2004 147 366

## Description

La présente invention concerne les véhicules automobiles à traction électrique, en particulier leur chaîne de traction.

Dans ce domaine, on connaît un certain nombre de propositions comme celles des documents EP 0878332, EP 1630026, WO 2006/032669, US 2007/0257570, WO 2007/083209 ou WO 2009/124892.

Le document US 2004/0147366 A1 décrit un véhicule automobile comprenant des moyens de traction électrique agissant sur des roues de deux essieux différents, les moyens de traction électrique comprenant deux machines électriques et deux transmissions. Une première transmission pour les roues de l'essieu arrière du véhicule définit un premier rapport de transmission fixe entre la vitesse de rotation de la première machine électrique et la vitesse de rotation des roues arrière, la première transmission comprenant des moyens de couplage/découplage aptes à adopter une position de couplage dans laquelle la rotation de la première machine électrique est couplée à la rotation des roues arrière et une position de découplage dans laquelle la rotation de la première machine électrique est découplée de la rotation des roues arrière, et la première transmission étant systématiquement découplée au-delà d'une vitesse de découplage du véhicule. La deuxième transmission pour les roues de l'essieu avant du véhicule comprend une transmission à variation continue. L'essieu avant est entraîné soit seulement par un moteur thermique, soit par le moteur thermique et la deuxième machine électrique en combinaison.

Un problème avec la traction électrique est celui du choix de la démultiplication, c'est à dire du choix du rapport de transmission entre la vitesse de rotation de la machine électrique et celle de la roue du véhicule. On a parfois proposé d'utiliser un système de changement de rapport à deux ou plusieurs rapports comme c'est d'usage sur les véhicules à moteur thermique mais dans leur grande majorité, les systèmes de traction électrique utilisent un rapport unique et fixe. Le choix de la valeur de ce rapport est alors un compromis qui doit prendre en compte des performances antagonistes comme la capacité d'accélération à basse vitesse et la capacité à atteindre une vitesse maximale suffisante mais aussi des contraintes de conception mécanique comme le poids, l'encombrement ou les pertes de rendement dues aux moyens de réduction (engrenages par exemple). Il s'avère qu'un tel compromis est rarement satisfaisant puisqu'en particulier une partie du potentiel d'accélération doit être sacrifié au profit de la vitesse maximale et vice-versa.

L'invention a donc pour objectif de résoudre ce problème.

L'invention propose pour cela un véhicule automobile comprenant des moyens de traction électrique agissant sur au moins deux roues de deux essieux différents, les moyens de traction électrique comprenant une machine électrique et une transmission définissant un rapport de transmission fixe entre la vitesse de rotation de la machine électrique et la vitesse de rotation de la roue, une première transmission pour au moins une des roues d'un premier essieu définissant un premier rapport de transmission et une deuxième transmission pour au moins une des roues d'un deuxième essieu définissant un deuxième rapport de transmission, la première transmission comprenant des moyens de couplage/découplage aptes à adopter une position de couplage dans laquelle la rotation de la machine électrique est couplée à la rotation de la roue et une position de découplage dans laquelle la rotation de la machine électrique est découplée de la rotation de la roue, la première transmission étant systématiquement découplée au-delà d'une vitesse de découplage, la deuxième transmission étant couplée en permanence, ledit véhicule étant capable d'une vitesse maximale, le rapport entre la vitesse maximale et la vitesse de découplage étant supérieur à 1.6.

On comprend que l'on combine selon l'invention les avantages d'une chaîne de traction électrique ayant de bonnes performances d'accélération à basse vitesse avec ceux d'une chaîne de traction permettant une vitesse maximale élevée sans utiliser de dispositif de changement de rapport.

De préférence, le rapport entre la vitesse maximale et la vitesse de découplage est supérieur à 2.

De préférence encore, chaque roue du premier essieu est entraînée par une transmission définissant le premier rapport de transmission et chaque roue du deuxième essieu est entraînée par une transmission définissant le deuxième rapport de transmission.

De préférence encore, le premier essieu est situé à l'arrière du véhicule par rapport au deuxième essieu.

De préférence encore, chaque roue du premier essieu est entraînée par une machine électrique indépendante.

De préférence encore, chaque roue du deuxième essieu est également entraînée par une machine électrique indépendante.

Selon une variante de l'invention, les roues du deuxième essieu sont entraînées par une machine électrique commune.

Selon une autre variante de de l'invention, le véhicule comportant quatre roues, les premier et deuxième essieux comprennent chacun une roue dont la transmission définit un premier rapport de transmission et une roue dont la transmission définit un deuxième rapport de transmission, les roues dont la transmission définit un premier rapport de transmission étant disposées en diagonale par rapport au véhicule.

De préférence, les moyens de couplage/découplage comprennent un mécanisme à crabot et baladeur.

De préférence encore, le baladeur est coaxial à l'axe de la roue.

D'autres caractéristiques et avantages de l'invention apparaîtront grâce à la description de modes préférés de réalisation. Les figures représentent respectivement:
- Figure 1 : vue schématique de dessus d'un véhicule selon un premier mode de réalisation de l'invention.
- Figure 2 : vue schématique de dessus d'un véhicule selon un deuxième mode de réalisation de l'invention.
- Figure 3 : vue d'un moyeu motorisé utilisable dans le véhicule selon la figure 2.
- Figure 4 : vue schématique de dessus d'un véhicule selon un troisième mode de réalisation de l'invention.
- Figure 5 : vue schématique de dessus d'un véhicule selon un quatrième mode de réalisation de l'invention.
- Figure 6 : vue schématique de dessus d'un véhicule selon un cinquième mode de réalisation de l'invention.

Sur les différentes figures, les éléments identiques ou similaires portent les mêmes références. Leur description n'est donc pas systématiquement reprise.

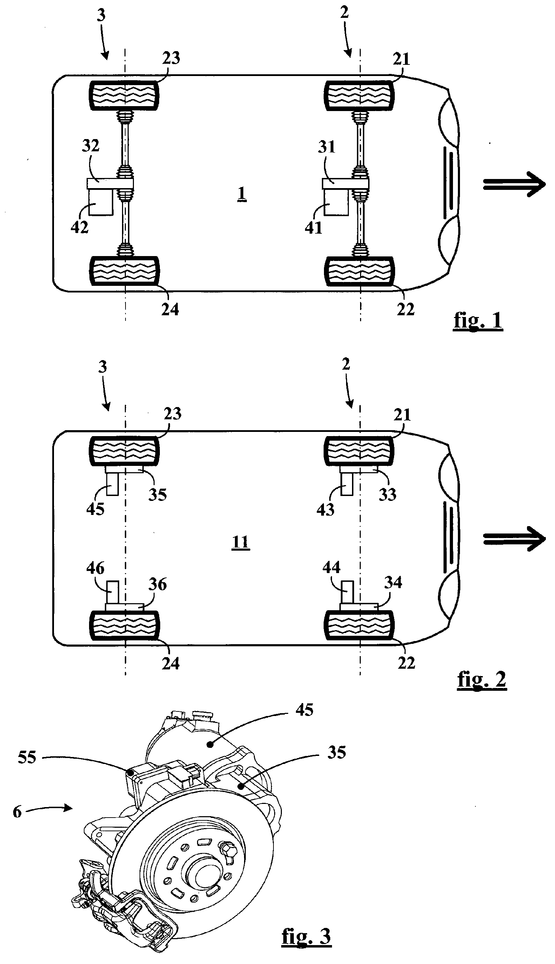

A la figure 1, on voit un véhicule 1 comportant un essieu avant 2 et un essieu arrière 3. L'essieu avant comporte une roue avant gauche 21 et une roue avant droite 22. L'essieu arrière comporte une roue arrière gauche 23 et une roue arrière droite 24. Chaque essieu est entraîné par une machine électrique (41, 42) par l'intermédiaire d'une transmission (31, 32). L'ensemble de ces moyens de traction permettent au véhicule d'accélérer depuis l'arrêt complet et jusqu'à sa vitesse maximale (Vmax). Selon un mode de réalisation préféré de l'invention, la transmission 32 des roues arrière comportent des moyens de couplage/découplage afin d'être systématiquement découplées au-delà d'une vitesse de découplage, cette vitesse de découplage étant nettement inférieure à la vitesse maximale (Vmax) du véhicule. La vitesse de découplage peut par exemple être égale à la moitié de la Vmax. Ainsi, le rapport de transmission de l'essieu arrière peut être choisi de manière à favoriser les accélérations à basse vitesse. Une fois la vitesse de découplage atteinte et l'essieu arrière découplé, toute la puissance électrique est disponible pour l'essieu avant dont la transmission permet au véhicule d'atteindre sa vitesse maximale (Vmax). De préférence, l'essieu avant ne comprend pas de moyens de couplage/découplage, c'est à dire qu'il est couplé en permanence. Sa machine électrique participe aux phases d'accélération surtout lorsque la demande d'accélération n'est pas maximale. Le fait que l'essieu avant soit couplé en permanence permet en outre qu'il soit toujours disponible pour assurer un freinage récupératif efficace.

Par exemple, pour le cas particulier où les machines électriques avant et arrière ont des caractéristiques identiques, on comprend que selon l'invention le rapport de transmission de l'essieu arrière sera plus élevé que celui de l'essieu avant afin que la machine électrique arrière 42 puisse développer sa puissance à plus basse vitesse avant d'être découplée lorsque le véhicule atteint la vitesse de découplage.

A la figure 2, on voit un véhicule 11 dont les essieux avant 2 et arrière 3 comportent des roues (21, 22, 23, 24) entraînées chacune par une machine électrique (43, 44, 45, 46) indépendante par l'intermédiaire de transmissions (33, 34, 35, 36) indépendantes. L'ensemble de ces moyens de traction permet au véhicule d'atteindre sa vitesse maximale (Vmax). Selon un mode de réalisation préféré de l'invention, les transmissions des roues arrière comportent des moyens de couplage/découplage afin d'être systématiquement découplées au-delà de la vitesse de découplage. Ainsi, le rapport de transmission de l'essieu arrière peut être choisi de manière à favoriser les accélérations à basse vitesse. De préférence, les transmissions (33, 34) de l'essieu avant ne comprennent pas de moyens de couplage/découplage, c'est à dire qu'elles sont couplées en permanence. Leurs machines électriques (43, 44) participent aux phases d'accélération surtout lorsque la demande d'accélération n'est pas maximale. Le fait que l'essieu avant soit couplé en permanence permet en outre qu'il soit toujours disponible pour assurer un freinage récupératif efficace.

Les moyens de tractions des roues arrière selon le mode de réalisation de la figure 2 sont de préférence des moyeux motorisés tels que décrits dans la demande internationale WO 2011/073320. On a représenté un tel moyeu motorisé à la figure 3. Sur cette figure, le moyeu motorisé 6 comprend une machine électrique 45, une transmission 35 et des moyens de couplage/découplage 55. Les moyens de couplage/découplage comprennent un mécanisme à crabot et baladeur, le baladeur étant coaxial à l'axe du moyeu et donc de la roue.

Les moyens de tractions des roues avant peuvent être similaires malgré l'absence des moyens de couplage/découplage.

Une variante intéressante de la configuration décrite ci-dessus en référence aux figures 2 et 3 est une configuration dans laquelle les transmissions à rapport de transmission élevé et dotées de moyens de couplage/découplage ne sont plus celles des deux roues arrière mais celles de deux roues disposées en diagonale par rapport au véhicule, c'est à dire par exemple celles de la roue avant gauche 21 et de la roue arrière droite 24. Les deux autres roues (avant droite 22 et arrière gauche 23) sont alors couplées en permanence et assurent seules la traction au-delà de la vitesse de découplage et jusqu'à la vitesse maximale du véhicule.

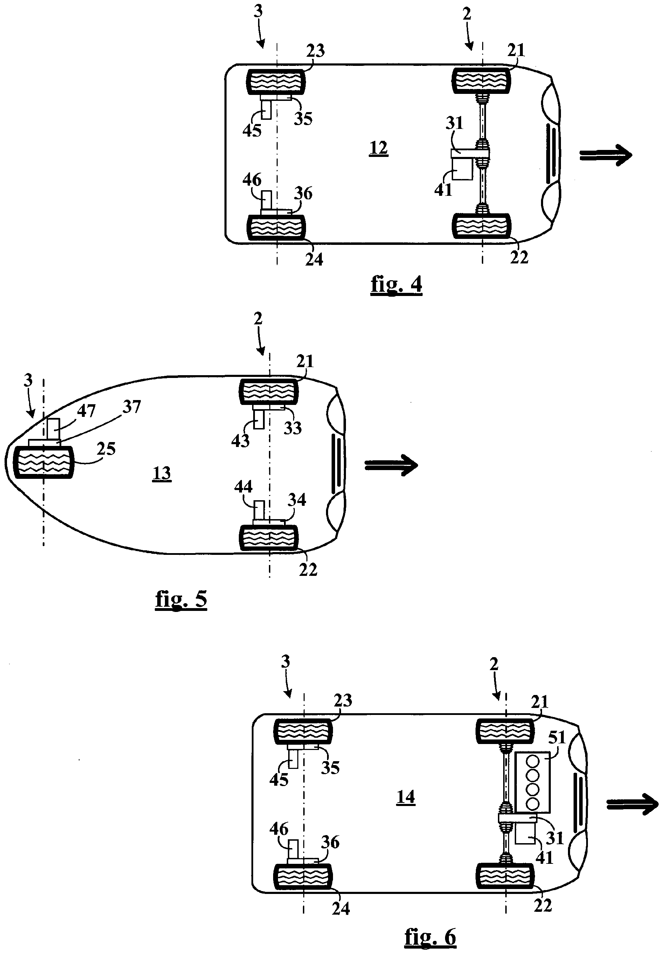

La figure 4 représente un véhicule 12 combinant un essieu avant à machine électrique commune selon la figure 1 et l'essieu arrière à machines électriques indépendantes selon la figure 2. De préférence, c'est l'essieu arrière qui comporte les moyens de couplage/découplage et le rapport de transmission élevé.

La figure 5 représente un véhicule à trois roues. La roue arrière 25 est donc ici unique et entraînée par une machine électrique 47 propre. Les roues avant sont entraînées chacune par l'intermédiaire de transmissions (33, 34) indépendantes par une machine électrique (43, 44) indépendantes selon le principe de la figure 2. Dans cette configuration, ce sont de préférence les moyens de traction de la roue arrière qui comportent des moyens de couplage/découplage afin de systématiquement découpler la machine électrique 47 au-delà de la vitesse de découplage. Ainsi, le rapport de transmission de l'essieu arrière peut être choisi de manière à favoriser les accélérations à basse vitesse. Les moyens de tractions de la roue arrière 25 sont de préférence du type du moyeu motorisé tel que décrit dans la demande internationale WO 2011/073320 et illustré à la figure 3. Comme décrit plus, les transmissions (33, 34) de l'essieu avant ne comprennent de préférence pas de moyens de couplage/découplage, c'est à dire qu'elles sont couplées en permanence.

La figure 6 représente une variante du véhicule de la figure 4 dans laquelle un moteur thermique 51 est associé à l'essieu avant et constitue des moyens supplémentaires de traction. Dans cette configuration, la vitesse maximale (Vmax) au sens de l'invention demeure bien celle que permettent d'atteindre les seuls moyens de traction électriques, c'est à dire sans tenir compte des performances permises par le moteur thermique.

Le choix du meilleur rapport de transmission pour chaque essieu pour exploiter au mieux la présente invention dépendra des caractéristiques du véhicule et de la technologie propre à la traction électrique de chaque roue. On comprend bien en particulier qu'en fonction du type de machine électrique, la plage de régime de rotation utile peut être très différente. De manière connue en soi, on a par exemple proposé des machines électriques destinées à travailler en prise directe avec la roue (rapport de transmission = 1) et dont le régime de rotation maximal n'atteint pas 3000 tours/minute. On a aussi proposé des machines électriques beaucoup plus compactes et légères et capables de régimes de rotation allant jusqu'à par exemple 20 000 tours/minute, auquel cas la transmission inclut des moyens de réduction qui définissent un rapport de transmission élevé, couramment de l'ordre de 10 à 20. Quelles que soient les machines électriques considérées, l'invention permet de choisir le rapport de transmission propre à chaque roue de telle manière que la ou les roues qui sont découplées au-delà de la vitesse de découplage soient les plus efficaces pour l'accélération du véhicule à basse vitesse et que les autres roues soient en mesure de conférer seules au véhicule sa vitesse maximale (Vmax).

## Revendications

1. Véhicule automobile (1) comprenant des moyens de traction électrique agissant sur au moins deux roues (21, 22, 23, 24) de deux essieux différents (2, 3), les moyens de traction électrique comprenant une machine électrique (43, 44, 45, 46) et une transmission (33, 34, 35, 36) définissant un rapport de transmission fixe entre la vitesse de rotation de la machine électrique et la vitesse de rotation de la roue, une première transmission (35) pour au moins une des roues d'un premier essieu (3) définissant un premier rapport de transmission et une deuxième transmission (33) pour au moins une des roues d'un deuxième essieu (2) définissant un deuxième rapport de transmission, la première transmission comprenant des moyens de couplage/découplage (55) aptes à adopter une position de couplage dans laquelle la rotation de la machine électrique est couplée à la rotation de la roue et une position de découplage dans laquelle la rotation de la machine électrique est découplée de la rotation de la roue, la première transmission étant systématiquement découplée au-delà d'une vitesse de découplage (Vd), la deuxième transmission étant couplée en permanence, ledit véhicule étant capable d'une vitesse maximale (Vmax), le rapport entre la vitesse maximale et la vitesse de découplage étant supérieur à 1.6.

2. Véhicule selon la revendication 1 dans lequel le rapport entre la vitesse maximale et la vitesse de découplage est supérieur à 2.

3. Véhicule selon l'une des revendications précédentes dans lequel chaque roue du premier essieu (3) est entraînée par une transmission définissant le premier rapport de transmission et chaque roue du deuxième essieu (2) est entraînée par une transmission définissant le deuxième rapport de transmission.

4. Véhicule selon l'une des revendications précédentes dans lequel le premier essieu est situé à l'arrière du véhicule par rapport au deuxième essieu.

5. Véhicule selon l'une des revendications précédentes dans lequel chaque roue du premier essieu est entraînée par une machine électrique indépendante.

6. Véhicule selon la revendication 5 dans lequel dans lequel chaque roue du deuxième essieu est également entraînée par une machine électrique indépendante.

7. Véhicule selon la revendication 5 dans lequel dans lequel les roues du deuxième essieu (2) sont entraînées par une machine électrique commune (41).

8. Véhicule selon l'une des revendications 1 ou 2 comportant quatre roues et dans lequel les premier et deuxième essieux comprennent chacun une roue dont la transmission définit un premier rapport de transmission et une roue dont la transmission définit un deuxième rapport de transmission, les roues dont la transmission définit un premier rapport de transmission étant disposées en diagonale par rapport au véhicule.

9. Véhicule selon l'une des revendications précédentes dans lequel les moyens de couplage/découplage comprennent un mécanisme à crabot et baladeur.

10. Véhicule selon la revendication 9 dans lequel le baladeur est coaxial à l'axe de la roue.

## Patentansprüche

1. Kraftfahrzeug (1), das Einrichtungen für den elektrischen Antrieb enthält, die auf mindestens zwei Räder (21, 22, 23, 24) zwei verschiedener Achsen (2, 3) einwirken, wobei die Einrichtungen für den elektrischen Antrieb eine elektrische Maschine (43, 44, 45, 46) und ein Getriebe (33, 34, 35, 36) enthalten, das ein festes Übersetzungsverhältnis zwischen der Drehgeschwindigkeit der elektrischen Maschine und der Drehgeschwindigkeit des Rads definiert, wobei ein erstes Getriebe (35) für mindestens eines der Räder einer ersten Achse (3) ein erstes Übersetzungsverhältnis definiert und ein zweites Getriebe (33) für mindestens eines der Räder einer zweiten Achse (2) ein zweites Übersetzungsverhältnis definiert, wobei das erste Getriebe Kopplungs-/Entkopplungseinrichtungen (55) enthält, die eine Kopplungsstellung, in der die Drehung der elektrischen Maschine mit der Drehung des Rads gekoppelt ist, und eine Entkopplungsstellung einnehmen können, in der die Drehung der elektrischen Maschine von der Drehung des Rads entkoppelt ist, wobei das erste Getriebe systematisch jenseits einer Entkopplungsgeschwindigkeit (Vd) entkoppelt ist, das zweite Getriebe durchgehend gekoppelt ist, wobei das Fahrzeug zu einer Maximalgeschwindigkeit (Vmax) fähig ist, wobei das Verhältnis zwischen der Maximalgeschwindigkeit und der Entkopplungsgeschwindigkeit höher als 1,6 ist.

2. Fahrzeug nach Anspruch 1, wobei das Verhältnis zwischen der Maximalgeschwindigkeit und der Entkopplungsgeschwindigkeit höher als 2 ist.

3. Fahrzeug nach einem der vorhergehenden Ansprüche, wobei jedes Rad der ersten Achse (3) von einem Getriebe angetrieben wird, das das erste Übersetzungsverhältnis definiert, und jedes Rad der zweiten Achse (2) von einem Getriebe angetrieben wird, das das zweite Übersetzungsverhältnis definiert.

4. Fahrzeug nach einem der vorhergehenden Ansprüche, wobei die erste Achse sich bezüglich der zweiten Achse an der Rückseite des Fahrzeugs befindet.

5. Fahrzeug nach einem der vorhergehenden Ansprüche, wobei jedes Rad der ersten Achse von einer unabhängigen elektrischen Maschine angetrieben wird.

6. Fahrzeug nach Anspruch 5, wobei jedes Rad der zweiten Achse ebenfalls von einer unabhängigen elektrischen Maschine angetrieben wird.

7. Fahrzeug nach Anspruch 5, wobei die Räder der zweiten Achse (2) von einer gemeinsamen elektrischen Maschine (41) angetrieben werden.

8. Fahrzeug nach einem der Ansprüche 1 oder 2, das vier Räder aufweist und wobei die erste und zweite Achse je ein Rad, dessen Getriebe ein erstes Übersetzungsverhältnis definiert, und ein Rad enthalten, dessen Getriebe ein zweites Übersetzungsverhältnis definiert, wobei die Räder, deren Getriebe ein erstes Übersetzungsverhältnis definiert, bezüglich des Fahrzeugs diagonal angeordnet sind.

9. Fahrzeug nach einem der vorhergehenden Ansprüche wobei die Kopplungs-/Entkopplungseinrichtungen einen Mechanismus mit Klaue und Schieberad enthalten.

10. Fahrzeug nach Anspruch 9, wobei das Schieberad zur Achse des Rads koaxial ist.

## Claims

1. Motor vehicle (1), including electric drive means acting on at least two wheels (21, 22, 23, 24) of two different axles (2, 3), the electric drive means comprising an electric machine (43, 44, 45, 46) and a transmission (33, 34, 35, 36) defining a fixed transmission ratio between the rotational speed of the electric machine and the rotational speed of the wheel, a first transmission (35) for at least one of the wheels of a first axle (3) defining a first transmission ratio and a second transmission (33) for at least one of the wheels of a second axle (2) defining a second transmission ratio, the first transmission including coupling/uncoupling means (55) adapted to adopt a coupling position in which the rotation of the electric machine is coupled to the rotation of the wheel and an uncoupling position in which the rotation of the electric machine is uncoupled from the rotation of the wheel, the first transmission being uncoupled systematically above an uncoupling speed (Vd) and the second transmission being coupled permanently, said vehicle being capable of a maximum speed (Vmax) and the ratio between the maximum speed and the uncoupling speed being greater than 1.6.

2. Vehicle according to Claim 1, wherein the ratio between the maximum speed and the uncoupling speed is greater than 2.

3. Vehicle according to either of the preceding claims, wherein each wheel of the first axle (3) is driven by a transmission defining the first transmission ratio and each wheel of the second axle (2) is driven by a transmission defining the second transmission ratio.

4. Vehicle according to any one of the preceding claims, wherein the first axle is located at the rear of the vehicle in relation to the second axle.

5. Vehicle according to any one of the preceding claims, wherein each wheel of the first axle is driven by an independent electric machine.

6. Vehicle according to Claim 5, wherein each wheel of the second axle is likewise driven by an independent electric machine.

7. Vehicle according to Claim 5, wherein the wheels of the second axle (2) are driven by a common electric machine (41).

8. Vehicle according to either of Claims 1 and 2, which includes four wheels and in which the first and second axles each include a wheel the transmission of which defines a first transmission ratio and a wheel the transmission of which defines a second transmission ratio, the wheels the transmissions of which define a first transmission ratio being disposed diagonally with respect to the vehicle.

9. Vehicle according to any one of the preceding claims, wherein the coupling/uncoupling means comprise a dog clutch and sliding member mechanism.

10. Vehicle according to Claim 9, wherein the sliding member is coaxial with the axis of the wheel.
